**Europäisches Patentamt**

**European Patent Office**

**Office européen des brevets**

(19)

(11) Veröffentlichungsnummer: **0 146 101**
**B1**

(12) **EUROPÄISCHE PATENTSCHRIFT**

(45) Veröffentlichungstag der Patentschrift: **29.08.90**

(21) Anmeldenummer: **84115100.4**

(22) Anmeldetag: **10.12.84**

(51) Int. Cl.⁵: **B 60 R 13/06**

(54) Dichtungsprofil.

(30) Priorität: **21.12.83 DE 3346070**

(43) Veröffentlichungstag der Anmeldung:
**26.06.85 Patentblatt 85/26**

(45) Bekanntmachung des Hinweises auf die
Patenterteilung:
**29.08.90 Patentblatt 90/35**

(84) Benannte Vertragsstaaten:
**DE FR GB IT**

(56) Entgegenhaltungen:
**DE-A-2 842 207**
**DE-U-1 925 096**
**FR-A-2 370 206**
**GB-A-2 036 840**

**PATENT ABSTRACTS OF JAPAN, Band 7, Nr.**
**110 (M-214)1255r, 13. Mai 1983; & JP - A - 58**
**30847 (KINUGAWA GOMU KOGYO) 23-02-1983**

(73) Patentinhaber: **METZELER Gesellschaft mit**
**beschränkter Haftung**
**Gneisenaustrasse 15**
**D-8000 München 50 (DE)**

(72) Erfinder: **Brocke, Rolf**
**Engetsweiler-Strasse 37**
**D-7988 Wangen 4 (DE)**

(74) Vertreter: **Michelis, Theodor, Dipl.-Ing.**
**Gneisenaustrasse 15**
**D-8000 München 50 (DE)**

Courier Press, Leamington Spa, England.

## Beschreibung

Die Erfindung bezieht sich auf ein Dichtungsprofil aus elastomerem Material mit U-förmigem Querschnitt, das auf eine abzudichtende Kante einer Tür oder eines Kofferraumes von Kraftfahrzeugen aufsetzbar ist.

Derartige Dichtungsprofile mit einem U-formigen, auf die abzudichtende Kante aufsetzbaren Klemmbereich erhalten ihre erforderliche Festigkeit entweder durch die Herstellung aus einem entsprechend stabilen Material, beispielsweise einem lederharten Gummi, oder durch die Einlagerung eines Armierungsstreifens aus Metall.

Dabei kann sich an den U-förmigen Klemmbereich bei Bedarf noch eine hohle Dichtungslippe anschließen, die zweckmäßigerweise aus einem weicheren Material hergestellt ist. Ein Problem bei diesen Dichtungsprofilen liegt aber darin, daß die üblichen Dichtlippen oder auch die Anlage der Innenflächen der Schenkel an der Kante keine ausreichende Dichtigkeit gewährleisten, so daß die Gefahr besteht, daß Feuchtigkeit in den Spalt zwischen (Blech-) Kante und Dichtungsprofil eindringt und es dort zu starkem Rostanfall kommt.

In diesem Zusammenhang ist es aus der DE-U-1 925 096 ein U-förmiges Dichtungsprofil bekannt, bei dem an einem Schenkel dieses Profils eine abschwenkbare Verlängerung über einen Bereich verringerten Querschnittes angesetzt ist. Diese Verlängerung soll nach ihrem Abbiegen eine zusätzliche Abdichtung zur benachbarten Blechkante bewirken. Dabei ist jedoch diese Verlängerung nicht flexibel abschwenkbar, sondern muß erwärmt werden, um durch die dadurch erreichte Materialerweichung ein Umbiegen der Verlängerung zu ermöglichen.

Ein derartiges Handling ist aber sehr aufwendig und im großtechnischen Einsatz kaum praktikabel. Darüber hinaus ist damit aber auch nur eine relativ begrenzte Abdichtwirkung zu erreichen.

Der vorliegenden Erfindung liegt demgegenüber die Aufgabe zugrunde, ein Dichtungsprofil zu schaffen, das einfach montiert werden kann und das eine sichere Abdichtung gewährleistet, so daß keine Feuchtigkeit in den Spalt zwischen dem U-förmigen Bereich des Profils und der Blechkante eindringen kann.

Zur Lösung dieser Aufgabe ist erfindungsgemäß vorgesehen, daß zumindest ein Schenkel des Dichtungsprofils über eine Teillänge derart abschwenkbar ausgebildet ist, daß er über einen Bereich verringerten Querschnitts flexibel mit dem übrigen Profil verbunden ist und daß die Innenseite des abschwenkbaren Profilabschnittes mit einer Klebdichtmasse beschichtet ist.

Die mit der Erfindung erzielten Vorteile beruhen insbesondere darauf, daß solche U-förmigen Klemmbereiche leicht gehandhabt und ohne Probleme auf die zugehörige Blechkante, beispielsweise am Kofferraum eines Kraftfahrzeuges, aufgebracht werden können. Diese Aufbringung kann insbesondere mittels Robotern oder ähnlichen Automaten erfolgen. Nach dem Aufsetzen des Klemmbereiches wird der abschwenkbare Schenkel an die Blechoberfläche angedrückt und dadurch auf die Kante aufgeklebt. Hierzu ist kein großer Kraftaufwand erforderlich, insbesondere nicht die Verwendung eines Gummihammers, wodurch die Gefahr einer Beschädigung des Gummiprofils besteht.

Zweckmäßig ist es dabei, wenn der abschwenkbare Profilabschnitt als Verlängerung eines profilschenkels an diesen angesetzt ist.

Es ist aber auch möglich, daß beide Profilschenkel über eine Teillänge abschwenkbar ausgebildet und auf ihrer Innenseite mit einer Klebdichtmasse beschichtet sind.

Dabei kann der die abzudichtende Kante starr umschließende Bereich des U-förmigen profils mit einer innenliegenden Armierung versehen sein.

Nach dem Aufkleben dieser Verlängerung ist der eigentliche Klemmbereich optimal abgedichtet, so daß keine Feuchtigkeit in den Spalt zwischen den Schenkeln des Klemmbereiches und der Blechkante eindringen kann.

Die zur Verfügung stehenden Klebstoffe, beispielsweise Bostik-Massen oder Klebebänder, haben keinen negativen Einfluß auf die Lackierung der Blechkanten, so daß die Klebewirkung auch nach längerer Zeit noch gewährleistet ist.

Die Erfindung wird im folgenden an Hand von Ausführungsbeispielen unter Bezugnahme auf die beiliegenden, schematischen Zeichnungen näher erläutert. Es zeigen

Fig. 1 einen Schnitt durch eine erste Ausführungsform eines Dichtungsprofils mit nach außen geklappter Verlängerung, also vor der Befestigung an der Kante,

Fig. 2 einen Schnitt durch eine zweite Ausführungsform eines an der Blechkante befestigten Dichtungsprofils,

Fig. 3 einen Schnitt durch eine dritte Ausführungsform eines an der Blechkante befestigten Dichtungsprofils.

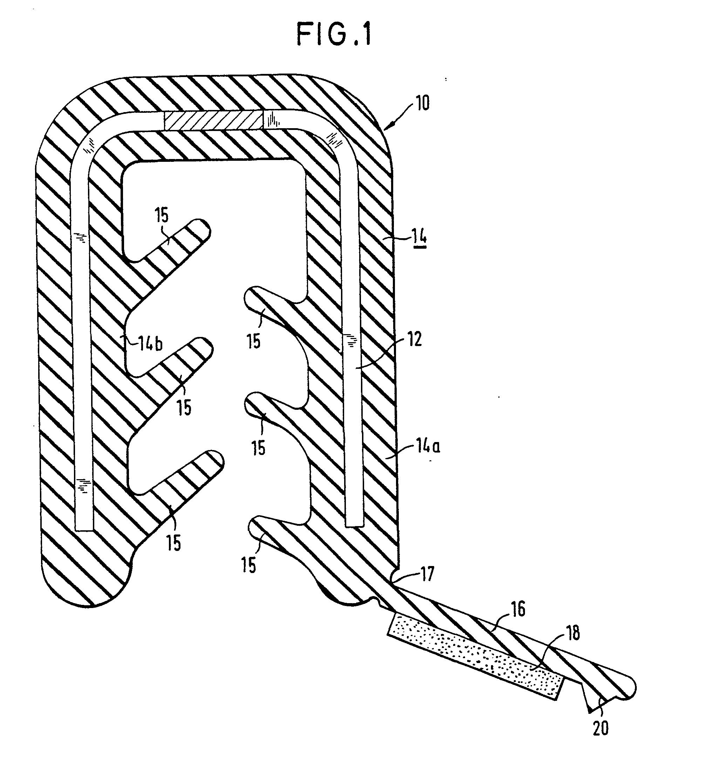

Das in Figur 1 dargestellte, allgemein durch das Bezugszeichen 10 angedeutete Dichtungsprofil, das insbesondere für die Kofferraum-Kante eines Kraftfahrzeugs eingesetzt werden kann, hat die übliche U-Form, besteht also aus einem U-förmigen Klemmbereich 14 aus einem elastomeren Material, der zwei Schenkel 14a und 14b aufweist. In die Schenkel ist ein ebenfalls U-förmiges Armierungsband 12 eingesetzt, das die erforderliche Klemmkraft erzeugt.

Die Innenflächen der beiden Schenkel 14a, 14b des Klemmbereiches 14 sind mit nach innen gerichteten Dichtlippen 15 versehen, die beim Aufsetzen dieses Dichtungsprofils 10 auf die nicht dargestellte Blechkante eines Kofferraums verformt werden und dadurch die erforderlichen Haltekräfte erzeugen.

Der gemäß der Darstellung in Figur 1 rechte Schenkel 14a ist über einen Bereich 17 mit verringertem Querschnitt mit einer Verlängerung 16 verbunden, deren Innenfläche mit einer Klebstoffschicht 18 versehen ist. Diese Klebstoffschicht kann als Klebeband oder als Bostik-Masse ausgebildet sein.

Das untere Ende der Verlängerung 16 ist an seiner Innenfläche mit einem spitzen Vorsprung 20 versehen.

Der Bereich 17 mit dem verringerten Querschnitt dient als eine Art "Gelenk", so daß die Verlängerung 16 um diese Gelenkstelle geschwenkt werden kann.

Nach dem Aufsetzen des Dichtungsprofils 10 auf die nicht dargestellte Kante des Kofferraums eines Fahrzeugs wird die Verlängerung 16 gemäß der Darstellung in Figur 1 in Richtung des Uhrzeigersinns um den Bereich 17 gedreht, so daß die Klebstoffschicht 18 in Anlage an die Blechkante kommt und dadurch die Verlängerung 16 fest mit der lackierten Blechausführung verbunden wird.

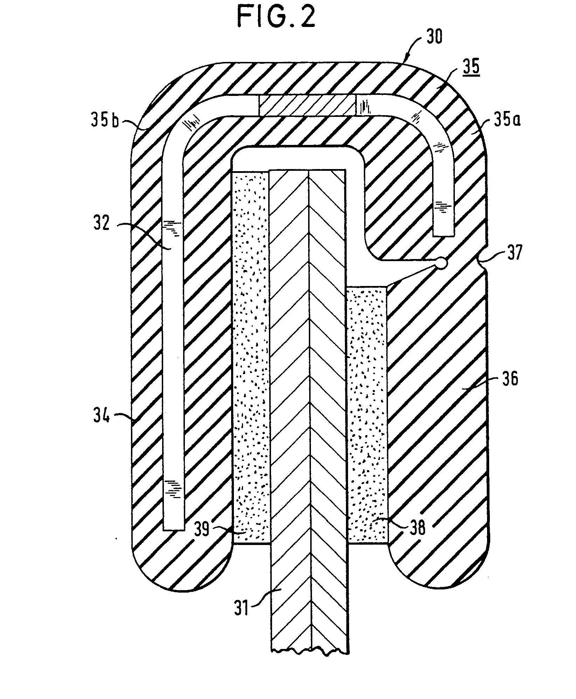

Die Figur 2 zeigt eine Variante dieser Ausführungsform, bei der das allgemein durch das Bezugszeichen 30 angedeutete Dichtungsprofil einen U-förmigen Klemmbereich 35 aus elastomeren Material mit zwei Schenkeln 35a, 35b aufweist. Der gemäß der Darstellung in Figur 2 linke Schenkel 35b setzt sich in einem Schenkelbereich 34 mit gleichem Dicke fort.

In diesem einstückigen, U-förmigen Klemmbereich 35, der über seine Länge im wesentlichen die gleiche Dicke hat, ist ebenfalls ein Armierungsband 32 aus einem Metall, beispielsweise aus Stahl, eingesetzt, wobei der linke Schenkel des Armierungsbandes 32 eine wesentlich größere Länge hat.

An den rechten Schenkel 35a des Klemmbereiches 35 schließt sich über einen Bereich 37 mit verringertem Durchmesser eine Verlängerung 36 an.

Diese Verlängerung 36 kann um den Bereich 37 gemäß der Darstellung in Figur 2 in Richtung gegen den Uhrzeigersinn nach außen geklappt werden.

Sowohl die Innenfläche des Bereiches 34 als auch die Innenfläche der Verlängerung 36 sind mit einer Klebstoffschicht 38 bzw. 39 versehen.

Bei der Montage dieses Dichtungsprofils 30 wird die Verlängerung 36 nach außen geklappt, so daß der nun seitlich offene, U-förmige Klemmbereich 35 ohne Probleme auf die Blechkante 31 aufgesetzt werden kann. Die Klebstoffschicht 39 des linken Schenkels 34 bzw. 35b liegt dabei an der linken Fläche der Blechkante 31 an.

Nachdem der U-förmige Klemmbereich 35 in der dargestellten Lage fixiert worden ist, wird die Verlängerung 36 gemäß der Darstellung in Figur 2 in Richtung des Uhrzeigersinns um den Bereich 37 geschwenkt, so daß die Klebstoffschicht 38 in Anlage an die rechte Fäche der Blechkante 31 kommt und damit die Verlängerung 36 auf die Blechkante 31 geklebt wird.

Das Dichtungsprofil 30 ist also über seine gesamte Länge auf die Blechkante 31 geklebt, so daß keine Feuchtigkeit unter das Dichtungsprofil 30 eindringen und die Blechkante 31 gefährden kann.

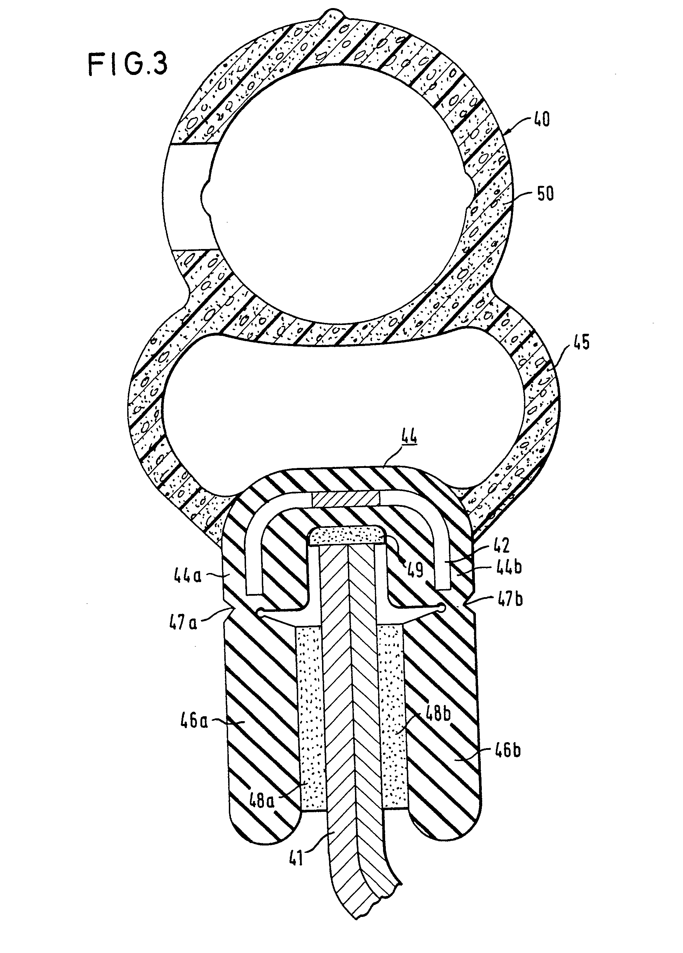

Figur 3 zeigt schließlich eine dritte Variante eines allgemein durch das Bezugszeichen 40 angedeuteten Dichtungsprofils, dessen U-förmiger Klemmbereich 44 zwei Schenkel 44a, 44b aus elastomeren Material, insbesondere Gummi, aufweist. An diesen U-förmigen Klemmbereich 44 schließen sich nach oben zwei hohle, rohrförmige Dichtbereiche 45 bzw. 50 an, die bei Bedarf aus einem elastomeren Material mit anderen Eigenschaften, beispielsweise einem weichen Gummi oder einem Schaumgummi, hergestellt sein können.

Bei dieser Ausführungsform des Dichtungsprofils 40 sind die beiden Schenkel 44a und 44b über Bereiche 47a, 47b mit geringem Profiequerschnitt mit Verlängerungen 46a, 46b aus elastomeren Material verbunden, deren Innenflächen mit Klebstoffschichten 48a, 48b versehen sind.

Auch die zentrale Innenfläche des U-förmigen Klemmbereiches 44 kann eine Klebstoffschicht 49 aufweisen.

Wie man in Figur 3 erkennt, können die Bereiche 47a, 47b mit verringertem Profilquerschnitt durch konische Einschnitte in die Innenflächen der Schenkel 44a, 44b gebildet werden.

Bei der Montage dieses Dichtungsprofils 40 werden zunächst die beiden Verlängerungen 46a, 46b nach außen geklappt, d.h., die Verlängerung 46a wird in Richtung des Uhrzeigersinns um den Bereich 47a und die Verlängerung 46b in Richtung gegen den Uhrzeigersinn um den Bereich 47b geschwenkt.

Dann wird der U-förmige Klemmbereich 44 auf die Blechkante 41 des Kofferraums eines Kraftfahrzeugs aufgesetzt, wobei die Klebstoffschicht 49 in Anlage an die Stirnfläche der Blechkante 41 kommt.

Anschließend werden die beiden nach außen stehenden Verlängerungen 46a, 46b nach innen geklappt, so daß die Klebstoffschichten 48a, 48b gegen die Seitenflächen der Blechkante 41 gedrückt werden und dadurch die beiden Verlängerungen 46a, 46b des Dichtungsprofils 40 fest mit der Blechkante 41 verbindet.

**Patentansprüche**

1. Dichtungsprofil aus elastomerem Material mit U-förmigem Querschnitt, das auf eine abzudichtende Kante einer Tür oder eines Kofferraumes von Kraftfahrzeugen aufsetzbar ist, dadurch gekennzeichnet, daß zumindest ein Schenkel (16; 36; 46a, b) des Dichtungsprofils (10; 30; 44) zumindest über eine Teillänge derart abschwenkbar ausgebildet ist, daß er über einen Bereich (17; 37; 47a, b) verringerten Querschnitts flexibel mit dem übrigen Profil (14a; 35a; 44a, b) verbunden ist, und daß die Innenseite des abschwenkbaren Profilabschnittes (16; 36; 46a, b) mit einer Klebdichtmasse (18; 38; 48a, b) beschichtet ist.

2. Dichtungsprofil nach Anspruch 1, dadurch gekennzeichnet, daß der abschwenkbare Profilabschnitt (16) als Verlängerung eines Profilschenkels (14a) an diesen angesetzt ist.

3. Dichtungsprofil nach Anspruch 1 dadurch gekennzeichnet, daß beide Profilschenkel (46a, b) über eine Teillänge abschwenkbar ausgebildet und auf ihrer Innenseite mit einer Klebdichtmasse (48a, b) beschichtet sind.

4. Dichtungsprofil nach einem der Ansprüche 1 bis 3, dadurch gekennzeichnet, daß der die abzudichtende Kante (31; 41) starr umschließende Bereich (14; 35; 44) des U-förmigen Profils (10; 30; 40) mit einer innenliegenden Armierung (12; 32; 42) versehen ist.

**Revendications**

1. Profilé d'étanchéité en un matériau élastomère de section transversale en forme de U, qui peut être monté sur un bord à rendre étanche d'une portière ou d'un coffre à bagages de véhicules automobiles, caractérisé en ce qu'au moins une branche (16; 36; 46a, b) du profilé d'étanchéité (10; 30; 44) est constituée pivotante au moins sur une partie de sa longueur, de manière à être reliée par une partie (17; 37; 47a, b) de section transversale réduite, de façon souple, au reste du profilé (14a; 35a; 44a, b), et en ce que le côté intérieur de la partie pivotante du profilé (16; 36; 46a, b) est revêtu d'une substance d'étanchéité adhésive (18; 38; 48a, b).

2. Profilé d'étanchéité suivant la revendication 1, caractérisé en ce que la partie pivotante du profilé (16) est ajoutée à une branche du profilé (14a) en tant que prolongement de celle-ci.

3. Profilé d'étanchéité suivant la revendication 1, caractérisé en ce que les deux branches du profilé (46a, b) sont constituées pivotantes sur une partie de leur longueur et sont revêtues, du côté intérieur, d'une substance adhésive d'étanchéité (48a, b).

4. Profilé d'étanchéité suivant l'une des revendications 1 à 3, caractérisé en ce que la partie (14; 35; 44) du profilé (10; 30; 40) en forme de U et entourant rigidement les bords (31; 41) à rendre étanches est munie d'une armature de renforcement intérieure (12; 32; 42).

**Claims**

1. Sealing profile composed of elastomer material with a Ushaped cross-section, which may be mounted on an edge to be sealed of a door or boot of motor vehicles, characterised in that at least one arm (16; 36; 46a, b) of the sealing profile (10; 30; 44) is formed so as to pivot down over part of its length in such a manner that it is flexibly connected to the rest of the profile (14a; 35a; 44a, b) via a region (17; 37; 47a, b) of reduced cross-section, and in that the inside of the downwardly pivotable profile section (16; 36; 46a, b) is coated with an adhesive sealing mass (18; 38; 48a, b).

2. Sealing profile according to claim 1, characterised in that the downwardly pivotable profile section (16) is connected to a profile arm (14a) as an extension thereof.

3. Sealing profile according to claim 1, characterised in that both profile arms (46a, b) are so formed as to pivot down over a part of their length and are coated on their inside with an adhesive sealing mass (48a, b).

4. Sealing profile according to one of claims 1 to 3, characterised in that the region (14; 35; 44) of the U-shaped profile (10; 30; 40) rigidly surrounding the edge (31; 41) to be sealed is provided with an internal reinforcement (12; 32; 42).

EP 0 146 101 B1

FIG.1

# FIG.2

FIG.3